# EUROPÄISCHE PATENTSCHRIFT

(11) **EP 0 720 562 B1**
(45) Veröffentlichungstag und Bekanntmachung des Hinweises auf die Patenterteilung: **12.02.1997**
(21) Anmeldenummer: 95901334.3
(22) Anmeldetag: 29.11.1994
(51) Int. Cl.: B65B 3/28, B65B 3/34, G01G 15/00

(54) **VERFAHREN UND VORRICHTUNG ZUM DOSIEREN UND ABFÜLLEN EINER FLÜSSIGKEIT IN VERPACKUNGSBEHÄLTER**
PROCESS AND DEVICE FOR METERING AND FEEDING A LIQUID INTO PACKING CONTAINERS
PROCEDE ET SYSTEME PERMETTANT DE DOSER ET DE VERSER UN LIQUIDE DANS DES RECIPIENTS D'EMBALLAGE

(30) Priorität: 09.12.1993 DE 4341934
(43) Veröffentlichungstag der Anmeldung: 10.07.1996
(73) Patentinhaber: ROBERT BOSCH GMBH, 70442 Stuttgart (DE)
(72) Erfinder: MAYER, Werner, D-74599 Wallhausen (DE)
(86) Internationale Anmeldenummer: DE9401405
(87) Internationale Veröffentlichungsnummer: WO9515884

(56) Entgegenhaltungen:
- EP-A- 0 406 092
- EP-A- 0 430 897
- FR-A- 2 341 136
- US-A- 4 417 610

## Beschreibung

### Stand der Technik

Die Erfindung geht aus von einem Verfahren zum Dosieren und Abfüllen einer Flüssigkeit in Verpackungsbehälter nach dem Oberbegriff des Anspruchs 1. Bei einem aus der EP 0 430 897 A1 bekannt gewordenen Verfahren dieser Art werden die zu befüllenden Verpackungsbehälter mittels einer Fördereinrichtung einer Abfülleinrichtung zugefördert, wobei sowohl das Tara-Gewicht als auch das Brutto-Gewicht der Verpackungsbehälter vor und nach der Abfülleinrichtung von jeweils einer Wägeeinrichtung erfasst und einer Steuereinrichtung als Eingangsgröße zugeführt werden. Die Abfülleinrichtung ist über einen Verteiler mit einem die Flüssigkeit bevorratenden Vorratsbehälter verbunden, der mit einem konstanten, geregelten Gasdruck beaufschlagt ist. Im Vorratsbehälter sind ein Sensor zur Erfassung des Füllstands, ein Sensor zur Erfassung der Flüssigkeitstemperatur und ein Sensor zur Erfassung des Gasdrucks angeordnet, die ebenfalls mit der Steuereinrichtung verbunden sind. Die Steuereinrichtung ermittelt aus den Eingangswerten der Sensoren und der Wägeeinrichtungen eine Ansteuerzeit für die Dosierventile der Abfülleinrichtung für eine bestimmte Soll-Füllmenge. Dabei wird zum gemessenen Gasdruck ein hydrostatischer Druck addiert, der seinerseits errechnet wird aus der bekannten Dichte und der gemessenen Temperatur der Flüssigkeit sowie dem Füllstand in dem Vorratsbehälter. Gleichzeitig kann durch die Erfassung der Flüssigkeitstemperatur deren Viskosität ermittelt und die Ansteuerzeit der Dosierventile gegebenenfalls korrigiert werden. Nachteilig bei der nach diesem Verfahren arbeitenden Vorrichtung ist, daß sämtliche Sensoren innerhalb des Vorratsbehälters angeordnet sind. Beim Wechseln des Vorratsbehälters, der in der Regel zur Verwendung verschiedener Produktchargen austauschbar angeordnet ist, sind somit umfangreiche Arbeiten zum Umrüsten der Sensoren notwendig. Außerdem ist die Erfassung der Flüssigkeitstemperatur im Vorratsbehälter problematisch, da sich die Temperatur, und damit auch die Viskosität der Flüssigkeit vom Vorratsbehälter bis zu den Dosierventilen ändern kann. Weiterhin wird zur Erfassung des Gesamtdrucks der Flüssigkeit an den Dosierventilen neben einem Gasdrucksensor zusätzlich ein Füllstandssensor benötigt. Daher baut die bekannte Vorrichtung relativ aufwendig.
Aus der genannten Schrift ist weiterhin bekannt, bei relativ geringen Entnahmemengen aus dem Vorratsbehälter im Verhältnis zu dessen Gesamtinhalt auf den Füllstandssensor zu verzichten. Dies schränkt jedoch die Einsatzmöglichkeiten in Bezug auf die entnehmbaren Flüssigkeitmengen ein oder erzeugt eine Dosierungenauigkeit.

Aus der US-PS 4 570 822 ist ferner eine rechnergesteuerte Dosiervorrichtung bekannt, bei der jedem Dosierventil ein eigener Drucksensor zur Erfassung des Gesamtdrucks zugeordnet ist. Weiterhin wird jedes Dosierventil von einem Rechner separat angesteuert.

Nachteilig bei dieser bekannten Dosiervorrichtung ist, daß sie durch die vielen Drucksensoren aufwendig baut und keine Temperaturberücksichtigung vorsieht.

### Vorteile der Erfindung

Das erfindungsgemäße Verfahren zum Dosieren und Abfüllen einer Flüssigkeit in Verpackungsbehälter mit den kennzeichnenden Merkmalen des Anspruchs 1 hat demgegenüber den Vorteil, daß durch die Anordnung des Drucksensors und gegebenenfalls des Temperatursensors in unmittelbarer Nähe der Dosierventile die für die Dosierung wesentlichen Parameter genau erfasst werden, so daß das Gewicht der abgefüllten Mengen sehr exakt ist. Als wesentlicher Vorteil ergibt sich weiterhin, daß die Sensoren bei einem Produktbehälterwechsel nicht ausgetauscht oder umgebaut werden müssen. Ist die Temperatur der Flüssigkeit zum Zeitpunkt des Abfüllens bekannt, so kann auf den Temperatursensor verzichtet werden. Dadurch wird der Aufbau der Vorrichtung weiter vereinfacht.

Weitere Vorteile und vorteilhafte Weiterbildungen ergeben sich aus den Unteransprüchen und der Beschreibung.

### Zeichnung

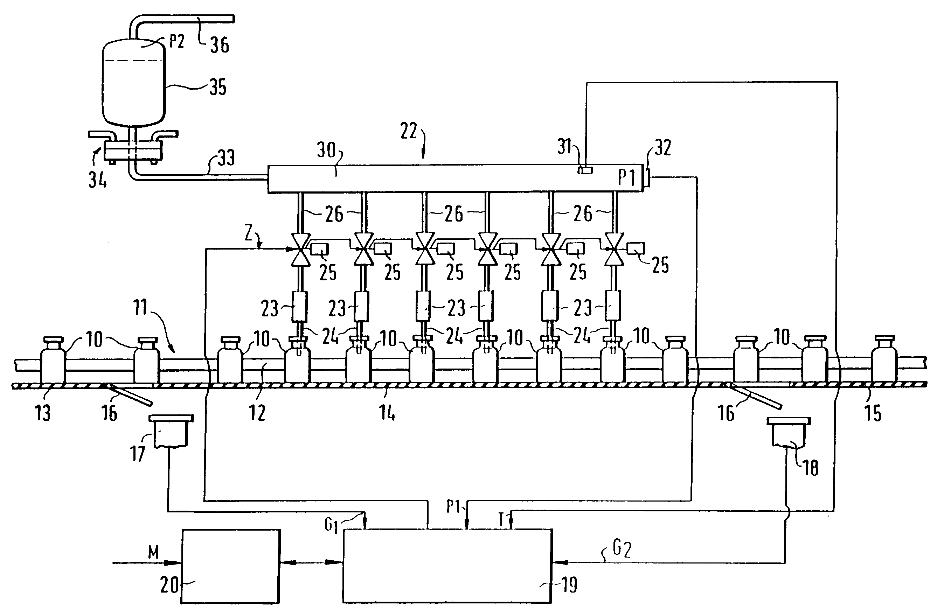

Ein Ausführungsbeispiel der Erfindung ist in der Zeichnung dargestellt, die eine Vorrichtung zum Dosieren und Abfüllen einer Flüssigkeit in Verpackungsbehälter in schematischer Ansicht zeigt, und in der nachfolgenden Beschreibung näher erläutert wird.

### Beschreibung des Ausführungsbeispiels

Die Vorrichtung zum Dosieren und Abfüllen einer Flüssigkeit in Verpackungsbehälter 10 hat eine Fördereinrichtung 11, mit der Verpackungsbehälter 10, wie beispielsweise Ampullen oder Vials hintereinander angeordneten Behandlungsstationen zugeführt werden. Die Fördereinrichtung 11 weist eine Transportschnecke 12 zum taktweisen oder kontinuierlichen Transport der Verpackungsbehälter 10 auf. Die Verpackungsbehälter 10 stehen und gleiten auf Schienenstücken 13 bis 15. Zwischen den Schienenstücken 13 und 14 beziehungsweise 14 und 15 ist jeweils eine über eine Ausschleußeinrichtung 16 ansteuerbare Wägeeinrichtung 17, 18 für jeweils einen Verpackungsbehälter 10 angeordnet, von denen die eine 17 das Tara-Gewicht G1, und die andere 18 das Brutto-Gewicht G2 des Verpackungsbehälters 10 erfasst und einer Steuereinrichtung 19 als Eingangsgröße zuführt.
In der Steuereinrichtung 19 sind beispielsweise produktspezifische Daten, wie der Viskositätsverlauf der Flüssigkeit über der Temperatur sowie Daten der Vorrichtung abgespeichert. Mit der Steuereinrichtung 19 ist eine Ein-/Ausgabeeinheit 20 verbunden, über die insbesondere eine Sollfüllmenge M beziehungsweise ein Sollfüllgewicht der Verpackungsbehälter 10 an die Steuereinrichtung 19 eingegeben werden kann.

Oberhalb der Fördereinrichtung 11 ist im Bereich des Schienenstücks 14 eine Abfülleinrichtung 22 angeordnet. Die Abfülleinrichtung 22 umfasst beim taktweisen Transport der Verpackungsbehälter 10 eine der Anzahl der pro Fördertakt zu füllenden Verpackungsbehälter 10 entsprechende Anzahl von Abfüllköpfen 23, beispielsweise sechs, die jeweils eine auf- und abbewegbare hohle Füllnadel 24 haben. Jeder Abfüllkopf 23 ist mit je einem von der Steuereinrichtung 19 gemeinsam ansteuerbaren Dosierventil 25 für die Flüssigkeit gekoppelt. Die Dosierventile 25 sind über kurze Leitungen 26 mit einem gemeinsamen, rohrförmigen Verteiler 30 verbunden, in dem ein Flüssigkeitsdruck P1 herrscht. Der Verteiler 30 ist seinerseits über eine Leitung 33 und eine Schnellspanneinrichtung 34 mit einem Produkt-Vorratsbehälter 35 verbunden. Das Druckgefälle zwischen dem mit der Flüssigkeit vollständig gefüllten Verteiler 30 und den einzelnen Dosierventilen 25 ist beispielsweise durch eine Anordnung der Dosierventile 25 in gleichem vertikalen Abstand zum Verteiler 30 stets gleich groß.
In dem Vorratsbehälter 35 befindet sich vorteilhafterweise die Menge an Flüssigkeit, die während einer Produktionsschicht zur Abfüllung der Verpackungsbehälter 10 benötigt wird. Dadurch ergibt sich, daß die Füllhöhe im Vorratsbehälter 35 bei jedem Abfüllzyklus nur in sehr geringem Maße abnimmt. Der Vorratsbehälter 35 ist über eine Druckleitung 36 mit einem Gasdruck P2 beaufschlagt.
Vorteilhafterweise besteht dabei eine Beeinflussung zwischen den Drücken P1 und P2, so daß P2 beispielsweise von der Steuereinrichtung 19 so geregelt wird, daß sich stets ein Druck P1 einstellt, dessen Toleranz zum Beispiel +/- 0,05 bar beträgt. Somit können verschiedene Anordnungen des Vorratbehälters 35 an der Vorrichtung sowie ein sinkender Flüssigkeitsspiegel in dem Vorratsbehälter 35 ausgeglichen werden.
Es ist jedoch auch möglich, den Druck P2 für sich genommen annähernd konstant zu regeln, wodurch der Druck P1 mit sinkendem Flüssigkeitspegel nach und nach abnimmt. Durch den Druck P2 wird generell ein höherer Druck der Flüssigkeit an den Dosierventilen 25, und damit eine große Abflußgeschwindigkeit aus dem Vorratsbehälter 35 ermöglicht, was insbesondere bei hochviskosen Flüssigkeiten das Fließverhalten begünstigt.

Im Verteiler 30 sind ein Temperatursensor 31 zur Erfassung einer Flüssigkeitstemperatur T und ein Drucksensor 32 zur Erfassung des Flüssigkeitsdruckes P1 angeordnet. Die beiden Sensoren 31, 32 sind ebenfalls mit der Steuereinrichtung 19 verbunden.

Die oben beschriebene Vorrichtung funktioniert wie folgt:
Die Verpackungsbehälter 10 werden von der Transportschnecke 12 der Abfülleinrichtung 22 beispielsweise taktweise zugefördert. Sobald je ein Verpackungsbehälter 10 unter seinem zugeordneten Abfüllkopf 23 positioniert ist, werden die Füllnadeln 24 der Abfüllköpfe 23 abgesenkt und in die Verpackungsbehälter 10 eingeführt. Gleichzeitig beginnt durch eine entsprechende Ansteuerung der Dosierventile 25 durch die Steuereinrichtung 19 das Abfüllen der Soll-Füllmenge M in die Verpackungsbehälter 10.
Zur Berechnung einer Ansteuerzeit Z für die Dosierventile 25 zum Dosieren der Soll-Füllmenge M durch die Steuereinrichtung 19 werden sowohl die vom Temperatursensor 31 gemessene Temperatur T, als auch der von dem Drucksensor 32 ermittelte Druck P1 zugrundegelegt. Dabei ist wesentlich, daß der in der Nähe der Dosierventile 25 im Verteiler 30 gemessene Druck P1 einen Gesamtdruck der Flüssigkeit darstellt, bestehend aus dem Gasdruck P2 und dem hydrostatischen Druck der Flüssigkeitssäule über dem Drucksensor 32. Da die Geometrie der Vorrichtung, und damit auch das Druckgefälle zwischen dem Drucksensor 32 und den Dosierventilen 25 bekannt und in der Steuereinrichtung 19 abgespeichert ist, erfolgt somit allein mit dem Druckwert P1 und den bekannten Formfaktoren der Dosierventile 25 sowie den Flüssigkeitsparametern eine exakte Berechnung der Ansteuerzeit Z der Dosierventile 25. Zusätzlich wird durch die Erfassung der Flüssigkeitstemperatur T durch den Temperatursensor 31 die unterschiedliche Viskosität bei unterschiedlichen Temperaturen T der Flüssigkeit bei der Berechnung der Ansteuerzeit Z berücksichtigt.

Ist die Temperatur der Flüssigkeit zum Zeitpunkt des Abfüllens bekannt und insbesondere während einer Produktionsschicht konstant, so kann auch auf den Temperatursensor 31 verzichtet werden.

Ist die durch die Ansteuerzeit Z bestimmte Soll-Füllmenge M in die Verpackungsbehälter 10 eingebracht, so werden die Füllnadeln 24 durch die Abfüllköpfe 23 wieder aus den Verpackungsbehältern 10 herausgehoben. Anschließend werden die Verpackungsbehälter 10 durch die Förderschnecke 12 taktweise einer anderen Bearbeitungsstation, beispielsweise einer Verschließstation, zugefördert. Gleichzeitig wiederholt sich für neu in die Vorrichtung geförderte Verpackungsbehälter 10 der Vorgang wie oben beschrieben.

Um die exakte Dosierung der Flüssigkeitmenge und damit der Soll-Füllmenge M durch die Vorrichtung zu kontrollieren beziehungsweise zu regeln, werden stichprobenartig über die Ausschleußeinrichtungen 16 einzelne Verpackungsbehälter 10 entnommen und den Wägeeinrichtungen 17, 18 zugeführt. Die dosierte Flüssigkeitsmenge wird von der Steuereinrichtung 19 als Differenz des Brutto-Gewichts G2 und des Tara-Gewichts G1 errechnet. Dabei ist es mit Hilfe der sogenannten statistischen Prozeßkontrolle (SPC) möglich, beim Unter- oder Überschreiten von definierten Eingriffsgrenzen, beispielsweise der Flüssigkeitsmenge, aber auch des Tara-Gewichts G1 der Verpackungsbehälter 10, von der Steuereinrichtung 19 eine entsprechend korrigierte Ansteuerzeit Z zu ermitteln.
Ist der Vorratsbehälter 35 nach Ablauf einer Produktionsschicht leer, oder soll eine andere Produktcharge verwendet werden, so kann durch einfaches Ab- beziehungsweise Ankoppeln eines anderen Vorratsbehälters 35 mittels der Schnellspanneinrichtung 34 die Betriebsbereitschaft der Vorrichtung wieder hergestellt werden. Es ist lediglich das Anschließen der Druckleitung 36 für den Gasdruck P2 an den Vorratsbehälter 35 notwendig.

## Patentansprüche

1. Verfahren zum Dosieren und Abfüllen einer Flüssigkeit in Verpackungsbehälter (10), bei dem die Verpackungsbehälter (10) von einer Fördereinrichtung (11) wenigstens einer Abfülleinrichtung (22) zugefördert werden, wobei sowohl das Tara-Gewicht (G1) als auch das Brutto-Gewicht (G2) der Verpackungsbehälter (10) von jeweils wenigstens einer Wägeeinrichtung (17, 18) vor und nach der Abfülleinrichtung (22) erfasst und einer Steuereinrichtung (19) als Eingangsgröße zugeführt werden, woraus die Steuereinrichtung (19) unter Berücksichtigung des von einem Drucksensor (32) erfassten Drucks (P1) der unter einem Gasdruck (P2) stehenden Flüssigkeit und gegebenenfalls unter Berücksichtigung einer von einem Temperatursensor (31) ermittelten Temperatur (T) der Flüssigkeit eine Ansteuerzeit (Z) für den Verpackungsbehältern (10) zugeordnete Ventile (25) der Abfülleinrichtung (22) zur Bemessung einer Soll-Füllmenge (M) errechnet, dadurch gekennzeichnet, daß sowohl der Druck (P1) als auch gegebenenfalls die Temperatur (T) der Flüssigkeit im Bereich eines der Abfülleinrichtung (22) zugeordneten Verteilers (30) erfasst werden, und daß der Drucksensor (32) einen Gesamtdruck (P1), bestehend aus einem hydrostatischen Druckanteil und einem Gasdruckanteil (P2) erfasst.

2. Verfahren nach Anspruch 1, dadurch gekennzeichnet, daß die Erfassung des Tara-Gewichts (G1) und des Brutto-Gewichts (G2) der Verpackungsbehälter (10) stichprobenartig erfolgt.

3. Vorrichtung zum Dosieren und Abfüllen einer Flüssigkeit in Verpackungsbehälter nach dem Verfahren nach Anspruch 1 oder 2, mit einem von einem bestimmten Gasdruck (P2) beaufschlagten Produkt-Vorratsbehälter (35), der über einen Verteiler (30) mit wenigstens einer Abfüllvorrichtung (22) verbunden ist, und mit einer Fördereinrichtung (11) für die Verpackungsbehälter (10), wobei entlang des Förderwegs der Verpackungsbehälter (10) wenigstens zwei mit einer Steuervorrichtung (19) gekoppelte Wägeeinrichtungen (17, 18) zur Erfassung des Tara-Gewichts (G1) und des Brutto-Gewichts (G2) der Verpackungsbehälter (10) angeordnet sind, sowie mit einem Drucksensor (32) und gegebenenfalls mit einem Temperatursensor (31) für die Flüssigkeit, die ebenfalls mit der Steuervorrichtung (19) verbunden sind, dadurch gekennzeichnet, daß sowohl der Drucksensor (32) als auch gegebenenfalls der Temperatursensor (31) in dem Verteiler (30) angeordnet sind, und daß der Drucksensor (32) einen Gesamtdruck (P1) bestehend aus einem Gasdruckanteil (P2) und einem hydrostatischen Druckanteil erfasst.

4. Vorrichtung nach Anspruch 3, dadurch gekennzeichnet, daß der Produkt-Vorratsbehälter (35) austauschbar mit dem Verteiler (30) verbunden ist.

5. Vorrichtung nach Anspruch 3 oder 4, dadurch gekennzeichnet, daß die Abfülleinrichtung (22) mehrere Abfüllköpfe (23) mit Dosierventilen (25) hat, die von der Steuereinrichtung (19) gemeinsam ansteuerbar sind.

## Claims

1. Process for metering and introducing a liquid into packaging containers (10), in the case of which process the packaging containers (10) are conveyed to at least one liquid-introducing device (22) by means of a conveying device (11), both the tare weight (G1) and the gross weight (G2) of the packaging containers (10) being registered by in each case at least one weighing device (17, 18) upstream and downstream of the liquid-introducing device (22) and being fed to a control device (19) as input variable, from which the control device (19), taking account of the pressure (P1), registered by a pressure sensor (32), of the liquid subjected to a gas pressure (P2) and, if appropriate, taking account of a temperature (T), determined by a temperature sensor (31), of the liquid, calculates an activation time (Z) for valves (25), assigned to the packaging containers (10), of the liquid-introducing device (22) in order to determine a desired filling quantity (M), characterized in that both the pressure (P1) and, if appropriate, the temperature (T) of the liquid are registered in the region of a distributor (30) assigned to the liquid-introducing device (22), and in that the pressure sensor (32) registers a total pressure (P1), comprising a hydrostatic pressure fraction and a gas pressure fraction (P2).

2. Process according to Claim 1, characterized in that the tare weight (G1) and the gross weight (G2) of the packaging containers (10) are registered in the manner of a random sample.

3. Apparatus for metering and introducing a liquid into packaging containers by the process according to Claim 1 or 2, having a product supply container (35) which is subjected to a specific gas pressure (P2) and is connected to at least one liquid-introducing device (22) via a distributor (30), and having a conveying device (11) for the packaging containers (10), at least two weighing devices (17, 18) which are coupled to a control device (19) being arranged along the conveying path of the packaging containers (10) in order to register the tare weight (G1) and the gross weight (G2) of the packaging containers (10), and having a pressure sensor (32) and, if appropriate, having a temperature sensor (31) for the liquid, which are likewise connected to the control device (19), characterized in that both the pressure sensor (32) and, if appropriate, the temperature sensor (31) are arranged in the distributor (30), and in that the pressure sensor (32) registers a total pressure (P1), comprising a gas pressure fraction (P2) and a hydrostatic pressure fraction.

4. Apparatus according to Claim 3, characterized in that the product supply container (35) is connected exchangeably to the distributor (30).

5. Apparatus according to Claim 3 or 4, characterized in that the liquid-introducing device (22) has a plurality of liquid-introducing heads (23) with metering valves (25), which can be activated together by the control device (19).

## Revendications

1. Procédé de dosage et de remplissage d'un liquide dans des récipients de conditionnement (10), selon lequel les récipients (10) sont transférés par une installation de transfert (11) à au moins une installation de remplissage (22), à la fois la tare (G1) et le poids brut (G2) des récipients d'emballage (10) étant détectés par chaque fois au moins une installation de pesée (17, 18) en amont et en aval de l'installation de remplissage (22) et une installation de commande (19) les reçoit comme grandeurs d'entrée, puis l'installation de commande (19) tenant compte de la pression (P1) captée par l'un des capteurs (32), le liquide mis à une pression de gaz (P2) et le cas échéant en tenant compte d'une température (T) dont on a fait la moyenne à l'aide d'un capteur de température (31) pour le liquide, est calculée en fonction d'un temps de commande (Z) pour les récipients de conditionnement (10) auxquels sont associées les soupapes (25) de l'installation de remplissage (22) pour mesurer la quantité de remplissage de consigne (M),
caractérisé en ce qu'
à la fois la pression (P1) et le cas échéant la température (T) du liquide sont détectées au niveau de l'un des distributeurs (30) associés à l'installation de remplissage, et le capteur de pression (32) mesure une pression totale (P1) composée d'une composante de pression hydrostatique et d'une composante de pression de gaz (P2).

2. Procédé selon la revendication 1,
caractérisé en ce que
la détection de la tare (G1) et du poids brut (G2) des emballages de conditionnement (10) se fait par prélèvement.

3. Dispositif pour doser et remplir un liquide dans un récipient de conditionnement selon le procédé d'une quelconque des revendications 1 ou 2,
comprenant un réservoir (35) contenant le produit et soumis à une certaine pression de gaz (P2), ce réservoir étant relié par un distributeur (30) à au moins un dispositif de remplissage (22) et au moins à une installation de transfert (11) pour les récipients de conditionnement (10), et le long de la course de transfert des récipients de conditionnement (10) il y a au moins deux installations de pesée (17, 18), couplées à des dispositifs de commande (19), pour détecter la tare (G1) et le poids brut (G2) du récipient d'emballage (10), ainsi qu'un capteur de pression (32) et le cas échéant un capteur de température (31) pour les liquides de remplissage qui sont également reliés au dispositif de commande (19),
caractérisé en ce qu'
à la fois le capteur de pression (32) et le capteur de température (31) sont prévus dans le distributeur (30) et le capteur de pression (32) saisit une pression totale (P1) comprenant une composante de pression de gaz (P2) et une composante de pression hydrostatique.

4. Dispositif selon la revendication 3,
caractérisé en ce que
le réservoir (35) est relié de manière interchangeable au distributeur (30).

5. Dispositif selon l'une quelconque des revendications 3 ou 4,
caractérisé en ce que
le dispositif de remplissage (22) comporte plusieurs têtes de remplissage (23) équipées de soupapes de dosage (25) commandées en commun par l'installation de commande (19).
